# EUROPÄISCHE PATENTANMELDUNG

(11) **EP 0 844 742 A2**
(43) Veröffentlichungstag der Anmeldung: **27.05.1998**
(21) Anmeldenummer: 97810816.5
(22) Anmeldetag: 31.10.1997
(51) Int. Cl.: H04B 3/54

(54) **Verfahren zur Signalübertragung und Signalübertragungseinrichtung über die Abschirmung von Hoch- und Mittelspannungskabeln**

(30) Priorität: 22.11.1996 DE 19648382
(71) Anmelder: ABB RESEARCH LTD., 8050 Zürich (CH)
(72) Erfinder: Lehmann, Josef, 79761 Waldshut-Tiengen (DE); Rudolf, Paul, 5234 Villigen (CH); Sabbattini, Bruno, 5430 Wettingen (CH)
(74) Vertreter: Weibel, Beat

(57) **Zusammenfassung**

Kommunikationssignale lassen sich mittels kapazitiver und/oder induktiver Kopplung über einen Kabelschirm (11) eines 1- oder mehrphasigen Stromkabels (12) von Informations-Ein- und/oder Auskopplungsstationen (1, 4) über Zwischenstationen (2, 3) ohne Kommunikationsbedarf übertragen. Zur Verbesserung der Signalankopplung und zur Vermeidung von Verstärkern u. a. aktiven Bauelementen in den Zwischenstationen (2, 3) werden die mittels einer Trägerfrequenz zu übertragenden Kommunikationssignale transformatorisch auf den Kabelschirm (11) aufmoduliert und gleichzeitig von einem Erdpotential entkoppelt. In den Zwischenstationen (2, 3) werden die Kommunikationssignale ohne aktive Ein- und/oder Auskopplung hochfrequenzmäßig von Erdpotential getrennt. Jeder induktive Koppler (K1, K4) weist mindestens eine Primärwicklung (W3) mit mindestens 2 Windungen auf, welche einerseits elektrisch an den Kabelschirm (11) angeschlossen und andererseits mit einem Signalgegenleiter oder mit Erdpotential elektrisch verbunden ist. Die Erfindung eignet sich besonders zur digitalen Signalübertragung über die Abschirmung von Hoch- und Mittelspannungskabeln.

## Beschreibung

### TECHNISCHES GEBIET

Bei der Erfindung wird ausgegangen von einem Verfahren zur Signalübertragung und von einer Signalübertagungseinrichtung nach dem Oberbegriff der Patentansprüche 1 und 4.

### STAND DER TECHNIK

Mit den Oberbegriffen der Patentansprüche 1 und 4 nimmt die Erfindung auf einen Stand der Technik Bezug, wie er aus der DE-OS 2615311 bekannt ist. Dort ist ein Freileitungsseil mit mehreren verdrillten Einzeldrähten um einen Kommunikationskern mit einem elektrisch isolierten Zentralleiter beschrieben, der über einen Abblockkondensator mit einem geerdeten Übertrager verbunden ist. Gleichzeitig ist dieser Zentralleiter über eine HF-Drossel mit Einzelleitern des Freileitungsseiles und mit einem einseitig geerdeten Kondensator verbunden. Maßnahmen zur verlust freien Informationsübertragung über Zwischenstationen ohne Kommunikationsbedarf sind nicht angegeben.

Aus dem deutschen Gebrauchsmuster G 93 15 875 U1 ist eine Vorrichtung zur Einspeisung und zum Empfang von elektrischen Signalen über ein Mittelspannungskabel bekannt, bei welchem eine endseitig geerdete Kabelabschirmung von einem ggf. 2teiligen Ringkern mit magnetisch leitendem Material umschlossen ist. Eine auf den Ringkern gewickelte Übertragungsspule ist mit einer Sende- und/oder Empfangseinrichtung für die elektrischen Signale verbunden.

Dadurch, daß die Kabelabschirmung nur in einer Teilwindung um den Ringkern geführt ist, ist die Signalkopplung unbefriedigend. Etwa über die Kabelabschirmung übertragene Trägerfrequenzen werden gegen Erdpotential abgeleitet. An jedem Erdungspunkt des Kabelschirms, welcher unter eine kritische Impedanz fällt, muß das zu übertragende Trägerfrequenzsignal ausgekoppelt und verstärkt werden. Eine teilweise Automatisierung von Verteilnetzen ist somit nur unter sehr großem Aufwand möglich, da jede Unterstation im Signalpfad mit Einrichtungen zur Signalregenerierung bestückt werden muß.

### DARSTELLUNG DER ERFINDUNG

Die Erfindung, wie sie in den Patentansprüchen 1 und 4 definiert ist, löst die Aufgabe, ein Verfahren zur Signalübertragung und eine Signalübertagungseinrichtung der eingangs genannten Art derart weiterzuentwickeln, daß die Signalkopplung verbessert wird.

Vorteilhafte Ausgestaltungen der Erfindung sind in den abhängigen Patentansprüchen definiert.

Ein Vorteil der Erfindung besteht darin, daß die zu übertragenden Kommunikationssignale mit definierter, besserer Qualität in den Signalleiter eingekoppelt werden. Auf dem Signalleiter vorhandene hochfrequente Trägerfrequenzen werden nicht automatisch gegen Erdpotential abgeleitet und bedürfen somit keiner weiteren aktiven Behandlung durch Verstärker usw.

Gemäß vorteilhaften Ausgestaltung der Erfindung können an Zwischenstationen ohne Kommunikationsbedarf die zu übertragenden Informationen auf einfache Weise und ohne aktive Bauelemente nahezu verlustfrei und in guter Qualität übertragen werden. Dies selbst dann, wenn an diesen Punkten der Stromfluß über benachbarte Phasenleiter unterbrochen ist.

Die Erfindung eignet sich besonders zur digitalen Signalübertragung über die Abschirmung von Hoch- und Mittelspannungskabeln.

### KURZE BESCHREIBUNG DER ZEICHNUNGEN

Die Erfindung wird nachstehend anhand von Ausführungsbeispielen erläutert. Es zeigen:
- Fig. 1 - 3: Schaltungen von Signalübertagungseinrichtungen mit endseitigen Informations-Ein- und/oder Auskopplungsstationen und je 2 Zwischenstationen ohne Kommunikationsbedarf mit unterschiedlichen induktiven Kopplern,
- Fig. 4: einen Querschnitt durch ein Stromkabel mit 3 Phasenleitern und 4 Kabelschirmen, das zur Informationsübertragung in den Schaltungen gemäß den Fig. 1 - 3 einsetzbar ist, und
- Fig. 5: eine Schaltung zur Informationsübertragung mit 4 Übertragungsstationen und induktiver sowie kapazitiver Ein- und/oder Auskopplung der Information.

### WEGE ZUR AUSFÜHRUNG DER ERFINDUNG

In den Figuren sind gleiche Teile mit gleichen Bezugszeichen gekennzeichnet.

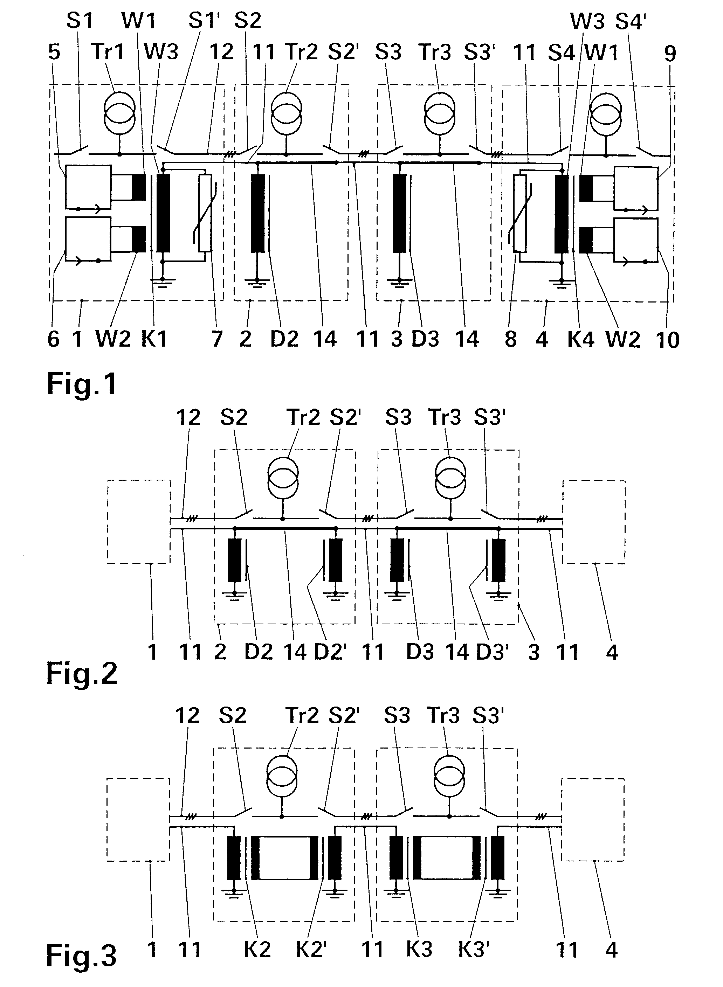

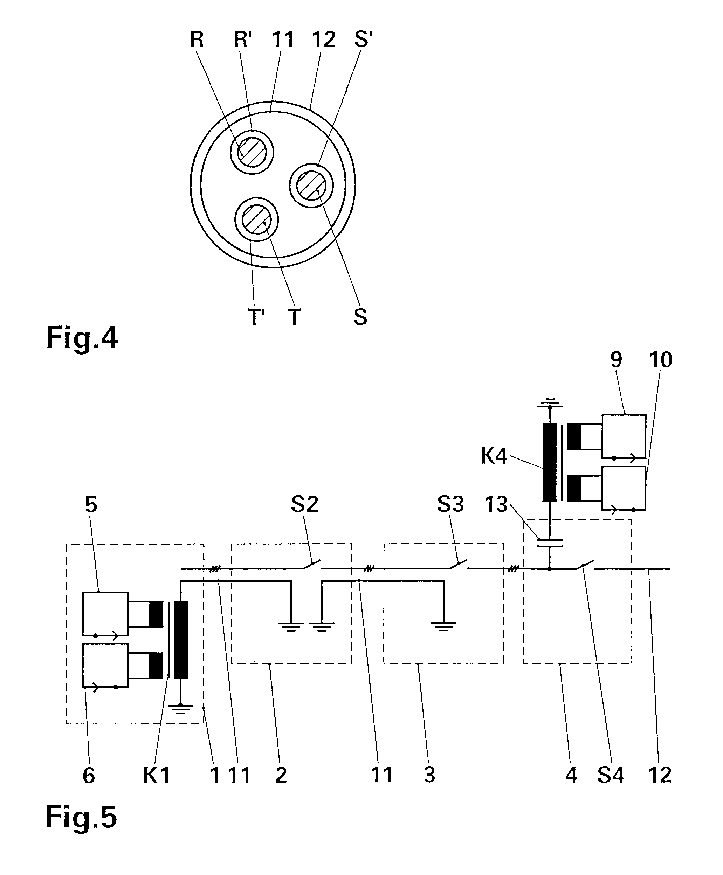

Fig. 1 zeigt 2 gleich aufgebaute Informations-Ein- und/oder Auskopplungsstationen (1, 4), die über 2 ebenfalls gleich aufgebaute Zwischenstationen (2, 3) miteinander in Wirkverbindung stehen. Alle 4 Stationen sind gleichzeitig Schaltstationen mit Schaltern (S1, S1'; S2, S2'; S3, S3'; S4, S4') in einer elektrischen Mittelspannungsleitung eines Stromkabels (12) gemäß Fig. 4. 3 Phasenleiter (R, S, T) sind von metallisch leitenden Phasenleiterschirmen bzw. Signalleitern (R', S', T') umgeben und diesen gegenüber sowie gegenseitig elektrisch isoliert. Mit (11) ist ein weiterer metallisch leitender Kabelschirm bzw. Signalleiter bezeichnet, der alle 3 Phasenleiter (R, S, T) umgibt und nach außen elektrisch isoliert ist. Es versteht sich, daß jeder Phasenleiter (R, S, T) in einem separaten Phasenkabel einen eigenen Kabelschirm (11) aufweisen kann (nicht dargestellt).

Das Stromkabel (12) ist in den Schaltstationen oder Unterstationen (1 - 4) an Transformatoren (Tr1 - Tr4) angeschlossen, welche durch die Schalter (S1, S1'; S2, S2'; S3, S3'; S4, S4') freigeschaltet werden können. Die Informations-Ein- und/oder Auskopplungsstationen (1, 4) weisen je einen induktiven Koppler (K1, K4) mit je einer Primärwicklung (W3) mit mindestens 2 Windungen sowie 2 Sekundärwicklungen (W1, W2) mit mehreren Windungen auf. Die beiden Sekundärwicklungen (W1) stehen jeweils mit einem Informationssender (5, 9) und die beiden Sekundärwicklungen (W2) mit einem Informationsempfänger (6, 10) in Wirkverbindung. Die Primärwicklungen (W3) sind einerseits an den Kabelschirm (11) und andererseits an Erdpotential angeschlossen. Parallel zu jeder Primärwicklung (W3) kann ein Überspannungsableiter (7, 8) geschaltet sein, damit sich in einem Fehlerfall keine Überspannungen aufbauen und die Schutzwirkung des Kabelschirmes (11) mindern können.

Bei den Schaltungen gemäß den Fig. 1 und 2 ist der Kabelschirm (11) in den Zwischenstationen (2, 3) durch metallische Verbindungen (14) elektrisch überbrückt, so daß eine durchgehende Verbindung besteht. Bei der Schaltung gemäß Fig. 1 ist der Kabelschirm (11) in jeder der beiden Zwischenstationen (2, 3) über je eine Drossel bzw. einen induktiven Widerstand (D2, D3) mit Erdpotential verbunden. Bei der Schaltung gemäß Fig. 2 ist der Kabelschirm (11) in jeder der beiden Zwischenstationen (2, 3) über je zwei Drosseln bzw. induktive Widerstände (D2, D2'; D3, D3') mit Erdpotential verbunden, je 1 induktiver Widerstand an jedem Schalter (S2, S2'; S3, S3'). Die induktiven Widerstände (D2, D2'; D3, D3') stellen Tiefpaßfilter dar, welche Gleichspannungs- und 50-Hz-Signale sowie deren harmonische Frequenzen auf Erdpotential ableiten. Trägerfrequenzen mit darin enthaltenen, zu übermittelnden Informationen werden nicht auf Erdpotential abgeleitet, so daß eine aktive Behandlung dieser Kommunikationssignale an den Erdungspunkten der Zwischenstationen (2, 3) nicht erforderlich ist.

Bei der Schaltung gemäß Fig. 3 ist der Kabelschirm (11) im Bereich der Zwischenstationen (2, 3) unterbrochen. Die Kommunikationssignale werden mittels induktiven Kopplern (K2, K2'; K3, K3') übertragen, deren Primärwicklungen einerseits an den Kabelschirm (11) und andererseits an Erdpotential angeschlossen sind. Die Sekundärwicklungen der induktiven Koppler (K2, K2') und (K3, K3') sind jeweils elektrisch miteinander verbunden. Diese Koppler (K2, K2') und (K3, K3'), können gleich aufgebaut sein wie die induktiven Koppler (K1, K4).

Fig. 5 zeigt die Schaltung einer Signalübertagungseinrichtung, bei welcher die Informations-Ein- und/oder Auskopplungsstation (1) derjenigen von Fig. 1 entspricht. Innerhalb der Zwischenstationen (2, 3) ist der Kabelschirm (11) nicht duchgeführt, sondern jeweils geerdet. In der Informations-Ein- und/oder Auskopplungsstation (4) erfolgt die Ein- und/oder Auskopplung der Kommunikationssignale mittels des induktiven Kopplers (K4) nicht zum Kabelschirm (11), sondern über einen Kondensator (13) zu mindestens einem Phasenleiter (R, S, T) des Stromkabels (12). Der Kabelschirm (11) ist kapazitiv mit den Phasenleitern (R, S, T) gekoppelt, auch über die Schalter (S2, S3). Somit können induktiv eingekoppelte Kommunikationssignale kapazitiv, d. h. über die Transferimpedanz der Stromkabel (12), ausgekoppelt werden und umgekehrt.

Die Ankopplung des auf eine Trägerfrequenz modulierten Kommunikationssignals läßt sich optimal auf die jeweiligen physikalischen Bedingungen des zu adaptierenden Punktes im Verteilernetz anpassen. Anstelle einer Erdung des Kabelschirmes (11) in den Zwischenstationen (2, 3) können auch induktive Widerstände (D2, D2', D3, D3') oder induktive Koppler (K2, K2') und (K3, K3') vorgesehen sein, wie in den Signalübertagungseinrichtungen der Fig. 1 - 3. Derartige Signalübertagungseinrichtungen eignen sich an solchen Stellen, an denen keine Signalübertagung über die Kabelschirme (11) möglich ist.

Signalübertagungseinrichtungen gemäß den Fig. 1 - 3 und 5 eignen sich vor allem im städtischen Bereich von erdverlegten, abgeschirmten 1- oder 3Phasen-Hoch- und Mittelspannungskabeln. Die Kabelschirme (11) dieser Stromkabel (12) sind normalerweise endseitig mit der allgemeinen Erdung verbunden. Über die Kabelschirme (11) fließen keine oder nur sehr kleine Ströme der 50-Hz-Leistungsübertragung. Nur bei gewissen Fehlerfällen müssen die Kabelschirme (11) Ströme ableiten können.

Anstelle der Kabelschirme (11) können auch die Phasenleiterschirme (R', S', T') als Signalleiter verwendet werden, wobei einer von ihnen genügt.

Wichtig ist, daß die Primärwicklung (W3) der induktiven Koppler (K1, K4) eine Induktivität von > 5 µH, vorzugsweise eine Induktivität im Bereich von 20 µH - 100 µH hat.

Die induktiven Koppler (K1, K4) müssen nicht notwendig 2 Sekundärwicklungen (W1, W2) aufweisen; es genügt eine Sekundärwicklung für Informationssender (5, 9) und Informationsempfänger (6, 10).

### BEZEICHNUNGSLISTE

- 1, 4: Informations-Ein- und/oder Auskopplungsstation
- 2, 3: Schaltstationen, Zwischenstationen
- 5, 9: Informationssender
- 6, 10: Informationsempfänger
- 7, 8: Überspannungsableiter
- 11: Kabelschirm, Signalleiter
- 12: Stromkabel
- 13: Kondensator
- 14: metallische Verbindungen innerhalb 2, 3

- D2, D2', D3, D3': Drosseln, induktive Widerstände
- K1, K2, K2', K3, K3', K4: induktive Koppler
- R, S, T: Phasenleiter
- R', S', T': Phasenleiterschirme, Signalleiter
- S1 - S4': Schalter
- Tr1 - Tr4: Transformatoren
- W1, W2: Sekundärwicklungen von K1 und K4
- W3: Primärwicklungen von K1 und K4

## Patentansprüche

1. Verfahren zur Signalübertragung,
a) wobei Kommunikationssignale transformatorisch auf mindestens einen Signalleiter (11; R', S', T') aufmoduliert werden, welcher bei ungestörtem Betrieb im wesentlichen nicht stromführend und gegenüber mindestens einem benachbarten Strom- oder Phasenleiter (12; R, S, T) elektrisch isoliert ist,
b) wobei diese Kommunikationssignale gleichzeitig von einem Erdpotential entkoppelt werden,
c) dadurch gekennzeichnet, daß die Kommunikationssignale in mindestens einer Zwischenstation (2, 3) ohne Ein- und/oder Auskopplung, welche Zwischenstation (2, 3) mindestens einen Schalter (S2, S3) im Strom- oder Phasenleiter (12; R, S, T) aufweist, hochfrequenzmäßig von Erdpotential getrennt werden.

2. Verfahren nach Anspruch 1, dadurch gekennzeichnet, daß induktiv oder kapazitiv auf den Signalleiter (11; R', S', T') aufmodulierte Kommunikationssignale von mindestens einem zum Signalleiter (11; R', S', T') benachbarten Phasenleiter (R, S, T) kapazitiv oder induktiv ausgekoppelt werden.

3. Verfahren nach Anspruch 1 oder 2, dadurch gekennzeichnet, daß induktiv oder kapazitiv auf den Phasenleiter (R, S, T) aufmodulierte Kommunikationssignale von mindestens einem Signalleiter (11; R', S', T') kapazitiv oder induktiv ausgekoppelt werden.

4. Signalübertagungseinrichtung
a) mit mindestens einem metallischen Signalleiter (11; R', S', T'), welcher bei ungestörtem Betrieb im wesentlichen nicht stromführend und gegenüber mindestens einem benachbarten Strom- oder Phasenleiter (12; R, S, T) elektrisch isoliert ist, und
b) der mit mindestens einem induktiven Koppler (K1, K4) zum Ein- und/oder Auskoppeln von Kommunikationssignalen in Wirkverbindung steht,
c) wobei der induktive Koppler (K1, K4) mindestens eine Primärwicklung (W3) mit mindestens 2 Windungen aufweist, welche einerseits elektrisch an den Signalleiter (11; R', S', T') angeschlossen und andererseits mit einem Signalgegenleiter oder mit Erdpotential elektrisch verbunden ist,
dadurch gekennzeichnet,
d) daß der Signalleiter (11; R', S', T') in mindestens einer Zwischenstation (2, 3) ohne Kommunikationsbedarf, welche mindestens einen Schalter (S2, S3) im Strom- oder Phasenleiter (12; R, S, T) aufweist, über mindestens einen induktiven Widerstand (D2, D2'; D3, D3'; K3, K3') mit dem Signalgegenleiter oder mit Erdpotential elektrisch verbunden ist.

5. Signalübertagungseinrichtung nach Anspruch 4, dadurch gekennzeichnet, daß der Signalleiter (11; R', S', T') in mindestens einer Zwischenstation (2, 3) galvanisch unterbrochen und über eine passive, transformatorische Verbindung (K2, K2'; K3, K3') geführt ist.

6. Signalübertagungseinrichtung nach Anspruch 4 oder 5, dadurch gekennzeichnet,
a) daß der Signalleiter (11; R', S', T') in mindestens einer Zwischenstation (2, 3) über zwei induktive Koppler (K2, K2'; K3, K3') geführt ist,
b) daß jeder der beiden induktiven Koppler mindestens eine Primärwicklung mit mindestens 2 Windungen aufweist, welche einerseits elektrisch an den Signalleiter (11; R', S', T') angeschlossen und andererseits mit einem Signalgegenleiter oder mit Erdpotential elektrisch verbunden ist, und
c) daß jeder der beiden induktiven Koppler mindestens eine Sekundärwicklung aufweist, welche beiden Sekundärwicklungen elektrisch miteinander verbunden sind.

7. Signalübertagungseinrichtung nach einem der Ansprüche 4 bis 6, dadurch gekennzeichnet,
a) daß der Signalleiter (11; R', S', T') kapazitiv mit mindestens einem Phasenleiter (R, S, T) gekoppelt ist und
b) daß mindestens einer dieser Phasenleiter (R, S, T) kapazitiv an einen induktiven Koppler (K4) zum Ein- und/oder Auskoppeln von Kommunikationssignalen angeschlossen ist.

8. Signalübertagungseinrichtung nach einem der Ansprüche 4 bis 7, dadurch gekennzeichnet,
a) daß der Signalleiter (11; R', S', T') ein metallisch leitender Phasenleiterschirm (R', S', T') oder
b) ein mehrere Phasenleiter (R, S, T) umgebender metallisch leitender Kabelschirm (11) ist.
